# EUROPÄISCHE PATENTSCHRIFT

(11) **EP 3 767 159 B1**
(45) Veröffentlichungstag und Bekanntmachung des Hinweises auf die Patenterteilung: **09.11.2022**
(21) Anmeldenummer: 20184902.3
(22) Anmeldetag: 09.07.2020
(51) Int. Cl.: F21S 9/02, F21V 8/00

(54) **NOTLICHTLEUCHTE**
EMERGENCY LIGHT
ÉCLAIRAGE DE SECOURS

(30) Priorität: 18.07.2019 DE 102019119449
(43) Veröffentlichungstag der Anmeldung: 20.01.2021
(73) Patentinhaber: Zumtobel Lighting GmbH, 6850 Dornbirn (AT)
(72) Erfinder: Schwaighofer, Andreas, 6850 Dornbirn (AT); Gassner, Patrik, 6850 Dornbirn (AT)
(74) Vertreter: Thun, Clemens

(56) Entgegenhaltungen:
- WO-A1-01/50444
- WO-A1-2012/173787
- WO-A1-2014/203725
- FR-A1- 2 989 152
- JP-A- H06 324 331
- US-A1- 2008 157 009
- US-A1- 2009 161 355
- US-A1- 2011 025 229
- US-A1- 2015 316 707
- US-A1- 2018 195 705

## Beschreibung

Die vorliegende Erfindung betrifft eine Leuchte, insbesondere eine Notlichtleuchte, deren Lichtverteilung an die Montagesituation und Anwendung variabel angepasst werden kann. Je nach Bedarf kann eine symmetrische oder eine asymmetrische Wegbeleuchtung, bzw. eine Flächenbeleuchtung realisiert werden.

In der Sicherheitsbeleuchtung kommen üblicherweise kleine, kompakte Leuchten zum Einsatz, die unterschiedliche Aufgaben erfüllen müssen. Diese Leuchten werden meist als Anbau- oder Einbauleuchte an bzw. in der Decke eines Raums montiert, in seltenen Situationen kann auch ein Wandanbau vorgesehen sein.

Die Sicherheitsbeleuchtung soll hierbei verschiedene Aufgaben erfüllen. Eine wesentliche Aufgabe besteht bspw. in der Beleuchtung eines Fluchtwegs, wobei die Sicherheitsbeleuchtung dann dazu dient, bspw. einen als Fluchtweg vorgesehenen Gang oder Bereich derart auszuleuchten, dass im Falle eines Notzustands Personen sich orientieren bzw. zurechtfinden und den Fluchtweg nutzen können. Im Falle einer derartigen Fluchtwegbeleuchtung wird dann eher eine lineare Lichtverteilung für das abgegebene Licht benötigt, da in diesem Fall die Sicherheitsleuchte bspw. in der Mitte eines länglichen zu beleuchtenden Bereichs angeordnet ist.

Zur Sicherheitsbeleuchtung zählt weiterhin auch eine sog. Antipanikbeleuchtung oder die Funktion, besondere Einrichtungen gezielt hervorzuheben. Bei diesen Einrichtungen kann es sich bspw. um Fluchtwegtüren oder Feuerlöscher handeln, die wiederum in einem Notzustand zweifelsfrei erkennbar sein sollten. Für diese Aufgabenstellungen wird dann jedoch eher ein flächiges Licht oder ein auf einen bestimmten Bereich gerichtetes Akzentlicht benötigt.

Letztendlich werden für Notlichtleuchten also unterschiedliche Lichtverteilungen benötigt, was dadurch ermöglicht wird, dass verschiedene Optiken zur Verfügung gestellt werden. Bereits bei Bestellung einer Leuchte muss der Verbraucher also wissen, für welche spätere Aufgabenstellung die Notlichtleuchte gedacht ist und dann eine Leuchte mit einer der gewünschten Lichtverteilung entsprechenden Optik wählen.

Eine weitere Eigenschaft bekannter Notlichtleuchten besteht darin, dass diese zum Reduzieren des Energieverbrauchs in der Regel lediglich wenige Lichtquellen aufweisen. Üblicherweise kommen ein oder zwei sog. High-Power-LEDs zum Einsatz, wobei dann das Licht dieser Hochleistungslichtquellen mit Hilfe einer Linse in die gewünschte Richtung gelenkt wird. Da bei einem derartigen Konzept eine nahezu punktförmige Lichtquelle zum Einsatz kommt, bedeutet dies, das verhältnismäßig hohe Leuchtdichten auftreten, sodass die Gefahr einer Blendung für Beobachter verhältnismäßig groß ist.

Die Anmeldungen WO 2014/203725 A1, US 2011/025229 A1, US 2018/195705 A1 und WO 01/50444 A1 haben sich bereits mit den zuvor genannten Problemstellungen beschäftigt. So weisen alle Dokument eine Anordnung umfassend ein Lichtleitelement, in welches durch LEDs durch seine Randflächen Licht eingestrahlt wird, welches daraufhin durch die ausgedehnte Fläche des Lichtleitelements wieder abgegeben werden soll.Der vorliegenden Erfindung liegt die Aufgabenstellung zugrunde, die oben genannten Nachteile für bekannte Notlichtleuchten weitestgehend zu vermeiden. Insbesondere soll die Möglichkeit bestehen, die Lichtverteilung möglichst variabel an den tatsächlichen Einsatzort anpassen zu können. Weiterhin sollte idealerweise die Blendwirkung durch das von der Leuchte abgegebene Licht reduziert werden.

Die Aufgabe wird durch eine Leuchte, welche die Merkmale des Anspruchs 1 aufweist, gelöst. Vorteilhafte Weiterbildungen der Erfindung sind Gegenstand der abhängigen Ansprüche.

Die erfindungsgemäße Lösung beruht auf dem Gedanken, zur Abgabe des von den Leuchtmitteln der Leuchte erzeugten Lichts ein plattenförmiges, rechteckiges Lichtleitelement zu verwenden, welches dazu ausgebildet ist, Licht, welches an Umfangsflächen des Lichtleitelements in dieses eingestrahlt wird, über eine Flachseite abzustrahlen. Dabei kommen vier Leuchtmittel oder Leuchtmittelgruppen zum Einsatz, welche an allen vier Umfangsflächen des Lichtleitelements angeordnet sind und somit aus unterschiedlichen Richtungen Licht in dieses einstrahlen. Zur Einstellung einer gewünschten Verteilung des von dem Lichtleitelement und damit von der Leuchte abgegebenen Lichts können dann die Leuchtmittel oder Leuchtmittelgruppen unabhängig voneinander aktiviert werden.

Erfindungsgemäß wird also eine Leuchte, insbesondere eine Notlichtleuchte vorgeschlagen, welche aufweist:
- ein plattenförmiges Lichtleitelement, welches dazu ausgebildet ist, Licht, welches an Umfangsflächen des Lichtleitelements in dieses eingestrahlt wird, über eine Flachseite abzustrahlen,
- Leuchtmittel, welche am Außenumfang des Lichtleitelements angeordnet und dazu ausgebildet sind, Licht über die Umfangsflächen des Lichtleitelements in dieses einzustrahlen,

wobei das Lichtleitelement (10) an seiner zur Lichtabstrahlung vorgesehenen Flachseite (12) Lichtauskoppelstrukturen (15) aufweist,
welche durch eine erhabene, gitterartige Struktur gebildet sind und Bereiche (17) der gitterartigen Struktur einen im Wesentlichen rechteckigen Querschnitt aufweisen, wobei die senkrecht zur Flachseite (12) des Lichtleitelements (10) orientierte Seitenwände (18) der gitterartigen Struktur einen Lichtaustritt ermöglichen und, wobei das Lichtleitelement (10) eine rechteckige, insbesondere eine quadratische Form aufweist, wobei an allen vier Umfangsflächen (11) des Lichtleitelements (10) jeweils unabhängig aktivierbare Leuchtmittel (22) oder Leuchtmittelgruppen (21) angeordnet sind, um eine Verteilung des von dem Lichtleitelement (10) abgegebenen Lichts einstellen zu können.

Durch wahlweises Aktivieren der verschiedenen Leuchtmittel bzw. Leuchtmittelgruppen kann also die Lichtverteilung des von der Leuchte insgesamt abgegebenen Lichts eingestellt werden, sodass die Lichtabstrahleigenschaften an den jeweiligen Einsatzort der Leuchte individuell angepasst werden können. Ein weiterer Vorteil der erfindungsgemäßen Lösung besteht ferner darin, dass durch die Nutzung des Lichtleitelements eine verhältnismäßig große Fläche (im Vergleich zu den punktförmigen Lichtquellen) zur Verfügung steht, über die Licht abgegeben wird. Die Leuchtdichte wird in diesem Fall deutlich reduziert und die Gefahr einer Blendung wird vermieden.

Eine Optimierung der Abgabe des Lichts über das Lichtleitelement kann des Weiteren dadurch erzielt werden, dass dieses eine sich verändernde Dicke aufweist. Insbesondere kann vorgesehen sein, dass das Lichtleitelement ausgehend von seinem Außenumfang eine sich in Richtung des Zentrums verjüngende Dicke aufweist. Diese Maßnahme trägt dazu bei, dass über die gesamte Fläche des Lichtleitelements im Wesentlichen effizient und gleichmäßig Licht abgegeben wird.

Ferner kann vorgesehen sein, dass im Zentrum des Lichtleitelements eine weitere Lichtquelle angeordnet ist, deren Licht getrennt bzw. unabhängig von dem Lichtleitelement abgegeben wird. Es kann sich in diesem Fall bspw. um eine einzelne LED handeln, die dazu dient, gezielt einen Bereich unterhalb der Notlichtleuchte mit hoher Helligkeit auszuleuchten. In diesem Fall kann der Lichtquelle ein von dem Lichtleitelement getrenntes optisches Element zugeordnet sein, wobei es sich hierbei insbesondere um eine Linse handeln kann.

Nachfolgend soll die Erfindung anhand der beiliegenden Zeichnung näher erläutert werden. Es zeigen:
- Figur 1: eine schematische, perspektivische Darstellung einer erfindungsgemäßen Leuchte;
- Figur 2: die zur Lichtabgabe vorgesehene Oberfläche eines bei der erfindungsgemäßen Leuchte zum Einsatz kommenden Lichtleitelements;
- Figur 3: eine Schnittdarstellung eines ersten Ausführungsbeispiels einer erfindungsgemäßen Leuchte;
- Figur 4: eine Schnittdarstellung eines zweiten Ausführungsbeispiels einer erfindungsgemäßen Leuchte;
- Figuren 5a - 5c: verschiedene Lichtverteilungen, die mit Hilfe der erfindungsgemäßen Leuchte eingestellt werden können;
- Figur 6: eine Variante zur Ausgestaltung des Lichtleitelements und
- Figur 7: eine Weiterbildung der erfindungsgemäßen Leuchte, bei der im Zentrum des Lichtleitelements eine weitere Lichtquelle positioniert ist.

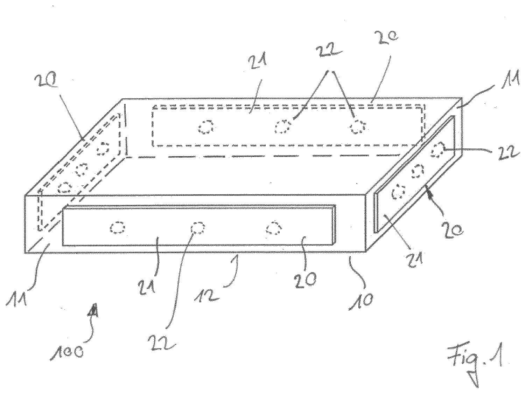

Figur 1 zeigt schematisch eine erfindungsgemäße Notlichtleuchte, deren Lichtverteilung angepasst werden kann. Die mit dem Bezugszeichen 100 versehene Leuchte kann als Deckenanbau- oder Deckeneinbauleuchte genutzt werden, wobei die hierfür vorgesehenen Komponenten zur Montage der Leuchte 100 in den Figuren nicht näher dargestellt sind. Das erfindungsgemäße Konzept betrifft insbesondere die Art und Weise der Lichterzeugung und Lichtabgabe und soll im Folgenden näher erläutert werden.

Eine erste wesentliche Eigenschaft der dargestellten Leuchte 100 besteht darin, dass im Vergleich zu bislang bekannten Notlichtleuchen eine verhältnismäßig große Fläche für die Lichtabgabe genutzt wird. Während bei bislang bekannten Leuchten das Licht bspw. einer Hochleistungs-LED mit Hilfe einer Linse in gewünschter Art und Weise verteilt wird, was zu verhältnismäßig hohen Leuchtdichten führt, ist bei der erfindungsgemäßen Leuchte 100 vorgesehen, durch eine deutliche Vergrößerung der Lichtabstrahlfläche die Leuchtdichten insgesamt zu reduzieren. Dies wird dadurch erreicht, dass die Leuchte 100 für die Lichtabgabe ein flächiges Lichtleitelement 10 nutzt, welches das zentrale Bauteil der Leuchte 100 darstellt. In üblicher Weise ist das Lichtleitelement 10 dazu vorgesehen, an Umfangsflächen des Lichtleitelements 10 in dieses eingestrahltes Licht mittels Totalreflexionen zu verteilen und möglichst gleichmäßig über eine Flachseite abzugeben. Im vorliegenden Fall ist das Lichtleitelement 10 quadratisch ausgeführt und weist somit erfindungsgemäß vier Seitenflächen 11 am Umfang auf, welche für die Lichteinkopplung vorgesehen sind. Das Licht soll dann über die senkrecht zu den Seitenflächen 11 ausgerichtete untere Flachseite 12 abgegeben werden, wobei die hierzu vorgesehenen Maßnahmen später noch näher erläutert werden.

An den Außenflächen 11 des Lichtleitelements 10 sind erfindungsgemäß im dargestellten Ausführungsbeispiel vier getrennte Leuchtmittelgruppen 20 vorgesehen, die jeweils durch eine LED-Platine 21 mit einigen LEDs 22 gebildet werden. Die LEDs 22 sind hierbei entlang der Platine 21 derart verteilt angeordnet, dass sie möglichst gleichmäßig über die entsprechende Seitenfläche 11 des Lichtleitelements 10 Licht in dieses einstrahlen.

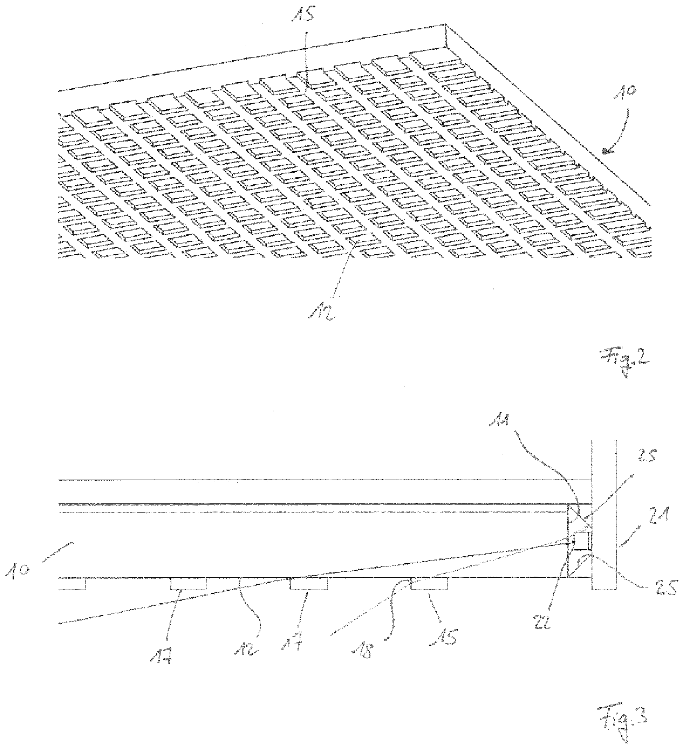

Wie die Schnittdarstellung von Figur 3 zeigt, können hierbei spezielle Maßnahmen vorgesehen sein, um die Lichteinkopplung zu optimieren. Bspw. kann vorgesehen sein, dass wie in Figur 3 angedeutet, ober- und unterhalb der LEDs 22 reflektierende Flächen 25 ausgebildet sind, die auch das unter flachen Winkeln von den LEDs 22 abgegebene Licht derart umlenken, dass dieses über die Seitenfläche 11 in das Lichtleitelement 10 eintreten kann. Alternativ oder ergänzend hierzu könnten an den Seitenflächen 11 auch spezielle linsenartige Lichteinkoppelstrukturen vorgesehen sein, die letztendlich dazu dienen sollen, das von den LEDs 22 abgegebene Licht möglichst vollständig in das Lichtleitelement 10 einzukoppeln, sodass dieses vollständig für die Lichtabgabe zur Verfügung steht.

An der zur Lichtabgabe vorgesehenen Unterseite 12 des Lichtleitelements sind dann entsprechende Auskoppelstrukturen vorgesehen, die in bekannter Weise dazu genutzt werden, das ansonsten mittels Totalreflexionen in dem Lichtleitelement 11 verteilte Licht auszukoppeln. Erfindungsgemäß ist vorgesehen, dass die Auskoppelstrukturen 15 eine gitterartige Struktur bilden, wie dies in Figur 2 erkennbar ist. Diese gitterartige Struktur besteht erfindungsgemäß aus erhabenen, im Querschnitt etwa rechteckförmigen Erhebungen 17, wie sie in Figur 3 in Schnittdarstellung erkennbar sind. Diese Strukturen 17 sind vorzugsweise einstückiger Bestandteil des Lichtleitelements 10, könnten ggf. aber auch durch eine bspw. auf die Unterseite des Lichtleitelements 10 aufgeklebte Folie oder ein zusätzliches optisches Element gebildet sein. Wesentlich ist, dass - wie anhand der Strahlenverläufe in Figur 3 erkennbar ist - Lichtstrahlen, welche auf die plane Unterseite 12 des Lichtleitelements 10 treffen, hier totalreflektiert werden. Lichtstrahlen hingegen, die auf entsprechende Strukturen 15 bzw. 17 treffen, können in diese eintreten und über deren Seitenwände 18 das Lichtleitelement 10 verlassen. Die hier dargestellten Strukturen 15 bzw. 17 erlauben also die Abgabe eines Lichts unter verhältnismäßig steilen Winkeln (in Bezug auf eine Senkrechte auf die Unterseite 12 des Lichtleitelements 10), sodass eine breitstreuende Lichtverteilung erzielt wird. Die Gefahr einer Blendwirkung wird hierbei trotz der stark seitlichen Lichtabgabe dadurch reduziert, dass das Licht über eine verhältnismäßig große Fläche abgegeben wird, sodass die letztendlich resultierenden Leuchtdichten im Vergleich zu aus dem Stand der Technik bekannten Lösungen geringer sind.

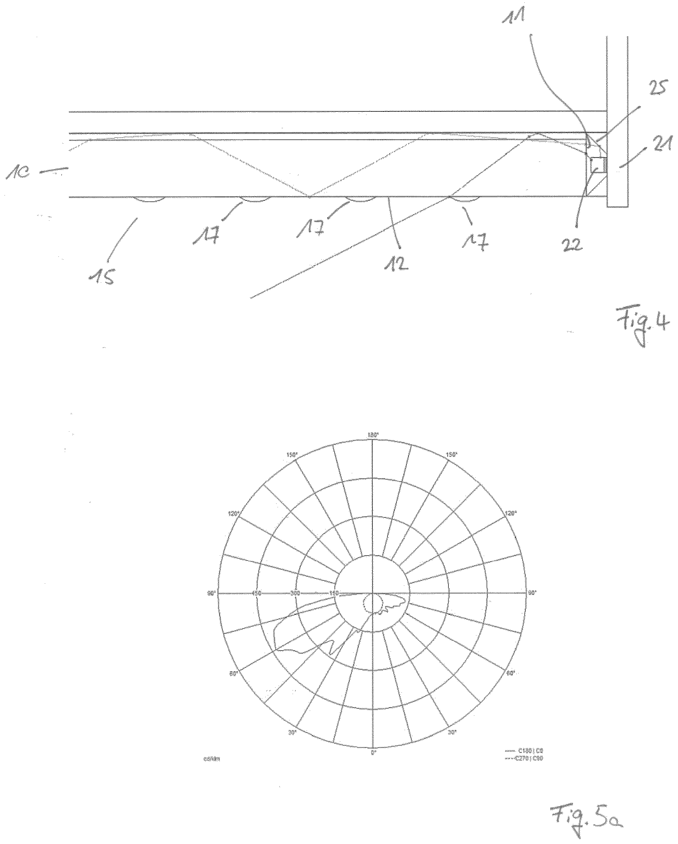

Auch wenn die Lichtstrahlen mehrfach innerhalb des Lichtleitelements 10 totalreflektiert werden, werden Strahlen, die letztendlich das Lichtleitelement 10 über die Auskoppelstruktur 15 verlassen, nach wie vor primär in einer durch die Lichtabstrahlung der zugehörigen LED 22 vorgegebenen Richtung die Unterseite des Lichtleitelements 10 verlassen. Bei der Darstellung gemäß Figur 3 bedeutet dies also, dass das von der hier gezeigten LED 22 stammende Licht überwiegend das Lichtleitelement 10 an dessen Unterseite nach links gerichtet verlassen wird, was der Hauptabstrahlrichtung der LED 22 entspricht. Wären LEDs 22 ausschließlich an der rechten Seite des Lichtleitelements 10 angeordnet, so würde sich eine Lichtverteilung des letztendlich abgegebenen Lichts ergeben, wie sie in Figur 5a schematisch dargestellt ist. In diesem Fall wird also eine asymmetrisch nach links gerichtete Lichtabstrahlung erzielt, die bspw. dazu genutzt werden könnte, bei entsprechender Anordnung der Notlichtleuchte 10 gezielt einen Bereich schräg unterhalb der Leuchte 100 zu beleuchten. Dieser Bereich könnte damit gezielt aufgehellt oder hervorgehoben werden, was dann sinnvoll ist, wenn es sich hierbei um die Tür eines Fluchtweges oder um einen Feuerlöscher handelt, sodass diese Objekte für Personen auch im Falle eines Notzustands zweifelsfrei erkennbar sind.

Bei der erfindungsgemäßen Leuchte ist allerdings wie bereits erwähnt vorgesehen, dass an allen vier Seitenflächen 11 des Lichtleitelements 10 Leuchtmittel 20 angeordnet sind. Erfindungsgemäß können diese vier Leuchtmittel-Gruppen 21 nunmehr unabhängig voneinander aktiviert bzw. deaktiviert werden, sodass durch entsprechendes Kombinieren der aktivierten Leuchtmittel 20 die Lichtverteilung des von der Leuchte 100 insgesamt abgegebenen Lichts angepasst werden kann.

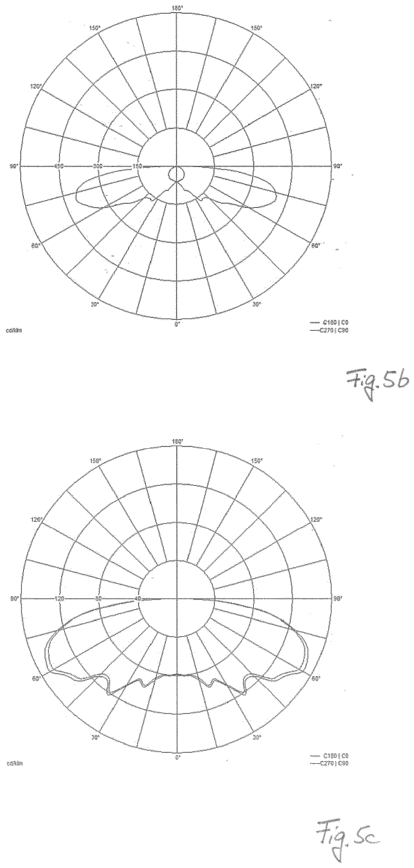

Werden bspw. zwei einander gegenüberliegende Leuchtmittelgruppen aktiviert, so ergibt sich abweichend von der in Figur 5a dargestellten Lichtverteilung nunmehr eine symmetrische Lichtverteilung des insgesamt abgegebenen Lichts, wie sie in Figur 5b dargestellt ist. Es handelt sich um eine mehr oder weniger lineare Verteilung, die aufgrund der flachen Abstrahlwinkel dazu geeignet ist, einen längeren, unterhalb der Leuchte 100 befindlichen Bereich auszuleuchten. Diese Lichtverteilung könnte dann bspw. dafür genutzt werden, einen als Fluchtweg genutzten länglichen Gang auszuleuchten.

Werden hingegen alle vier Leuchtmittel an allen vier Seitenwänden 11 des Lichtleitelements 10 aktiviert, so ergibt sich eine Lichtverteilung, wie sie in Figur 5c dargestellt ist. Diese ist dazu geeignet, einen größeren unterhalb der Leuchte befindlichen Bereich möglichst gleichmäßig aufzuhellen und kann dementsprechend als sog. Antipanikbeleuchtung genutzt werden.

Die obigen Erläuterungen zeigen, dass also durch wahlweises Aktivieren der verschiedenen Leuchtmittel 20 die Lichtverteilung der Leuchte 100 variabel eingestellt werden kann. Damit ist die Leuchte 100 für unterschiedliche Einsatzgebiete geeignet und kann im Vergleich zu bislang bekannten Lösungen vielseitig und variabel eingesetzt werden.

Dabei kann in einer einfachen Ausgestaltung vorgesehen sein, dass die Leuchtmittel 20 tatsächlich lediglich ein- bzw. ausgeschaltet werden können. In einer Weiterbildung kann jedoch auch vorgesehen sein, dass die Möglichkeit besteht, die Leuchtmittel-Gruppen jeweils individuell in ihrer Helligkeit einzustellen. einerseits könnte hierdurch eine Mischung der oben beschriebenen verschiedenen Lichtverteilungen erzielt werden, andererseits besteht die Möglichkeit, unabhängig von der gewählten Lichtverteilung die Menge des insgesamt abgegebenen Lichts konstant zu halten. Hinsichtlich der Ausgestaltung der zur Lichtauskopplung genutzten Strukturen bestehen unterschiedliche Möglichkeiten, diese zu realisieren. Figur 4 zeigt bspw. in Schnittdarstellung eine Variante, welche nicht Teil der beanspruchten Anordnung ist, bei der die Strukturen 15 durch linsenartige, insbesondere konvex ausgeführte Erhebungen 17 gebildet sind. Wiederum bilden diese bspw. eine Gitterstruktur wie sie in Figur 2 gezeigt ist. Die Form der Einzelstrukturen 17 eröffnet hierbei die Möglichkeit, Einfluss darauf zu nehmen, unter welchen Winkeln gegenüber der Senkrechten auf das Lichtleitelement 10 Lichtstrahlen dieses verlassen können. Während die Strukturen gemäß Figur 3 eine eher breite Verteilung erzielen, wird über die linsenartigen Vorwölbungen gemäß Figur 4 eine eher konzentrierte Lichtabgabe zur Unterseite hin erzielt, was bspw. bei größeren Montagehöhen für die Leuchte 100 sinnvoll sein kann. Letztendlich kann aber die Form der Lichtauskoppelstrukturen variabel gestaltet sein, wobei nicht nur wie in den Figuren gezeigt erhabene Strukturen zum Einsatz kommen können, sondern auch entsprechend geeignete Ausnehmungen oder Vertiefungen, welche nicht Teil der beanspruchten Anordnung sind. Auch Prismenstrukturen oder dergleichen wären denkbar.

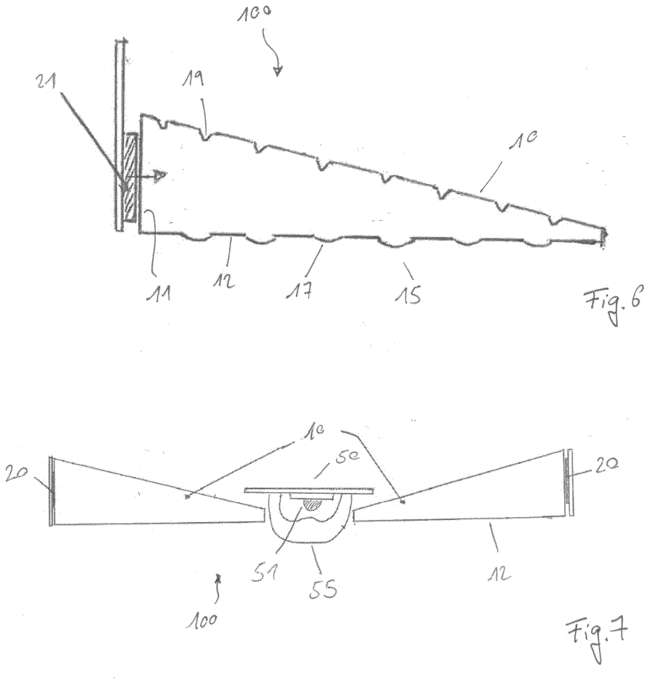

Weiterhin ist auch nicht erforderlich, das Lichtleitelement 10 wie in Figur 1 gezeigt quadratisch auszugestalten. Dieses könnte auch rechteckig ausgeführt sein Eine Weiterbildung der Erfindung, durch welche die Lichtabgabe zusätzlich optimiert werden kann, ist in Figur 6 gezeigt. Erkennbar ist hierbei nur ein seitlicher Bereich einer Schnittdarstellung der Leuchte 100, wobei erkennbar ist, dass das Lichtleitelement 10 nunmehr eine sich verändernde Dicke aufweist. Insbesondere ist dieses ausgehend vom Zentrum keilförmig ausgebildet bzw. derart ausgeführt, dass sich die Dicke ausgehend von der Seitenfläche 11 zum Zentrum des Lichtleitelements 10 hin verjüngt. Diese Maßnahme kann bspw. dazu genutzt werden, eine homogene Lichtabgabe über die gesamte Flachseite des Lichtleitelements 10 zu optimieren. Die keilförmige Struktur berücksichtigt hierbei, dass von den Leuchtmitteln 21 seitlich eingekoppeltes Licht auf dem Weg zum Zentrum hin bereits teilweise wieder über die Unterseite 12 abgegeben wird. Die sich verjüngende Querschnittsform führt hierbei dazu, dass zum Zentrum hin die Effizienz der Auskopplung erhöht wird. Letztendlich wird über die gesamte Fläche des Lichtleitelements 10 hinweg homogen Licht abgegeben.

Ferner können wie in Figur 6 gezeigt, an der zur Lichtabgabe vorgesehenen Oberseite des Lichtleitelements 10 zusätzliche Strukturen 19 vorgesehen sein, die eine Umlenkung auftreffender Lichtstrahlen derart bewirken, dass diese über die Unterseite hin abgegeben werden.

Figur 7 zeigt schließlich eine Weiterbildung der bislang beschriebenen erfindungsgemäßen Leuchte 100, die darin besteht, das im Zentrum des Lichtleitelements 10 eine zusätzliche Lichtquelle 50 angeordnet ist. Es handelt sich in diesem Fall um eine einzelne Hochleistungs-LED 51, der individuell eine eigene Optik 55 zugeordnet ist, die dazu dient, das von der LED 51 abgegebene Licht in gewünschter Weise auf einen unterhalb der Leuchte 100 liegenden Bereich zu konzentrieren. Diese zusätzliche Lichtquelle 50 ist in diesem Fall dazu vorgesehen, sehr konzentriert Licht abzugeben, um den entsprechenden Bereich im Falle einer Notbeleuchtung gezielt hervorzuheben. Die weiteren, am Außenumfang des Lichtleitelements 10 angeordneten Leuchtmittel 20 können dann wiederum wahlweise aktiviert werden, um die Lichtverteilung an die Montagesituation anzupassen.

Insgesamt wird somit eine Notlichtleuchte zur Verfügung gestellt, welche sehr variabel hinsichtlich der Lichtabgabe ist und damit an unterschiedliche Montagesituationen angepasst werden kann. Durch die Vergrößerung der Lichtabstrahlfläche kann weiterhin die Gefahr einer Blendung durch zu hohe Leuchtdichten vermieden werden.

## Patentansprüche

1. Leuchte (100), insbesondere Notlichtleuchte, aufweisend:
• ein plattenförmiges Lichtleitelement (10), welches dazu ausgebildet ist, Licht, welches an Umfangsflächen (11) des Lichtleitelements (10) in dieses eingestrahlt wird, über eine Flachseite (12) abzustrahlen,
• Leuchtmittel (20), welche am Außenumfang des Lichtleitelements (10) angeordnet und dazu ausgebildet sind, Licht über die Umfangsflächen (11) des Lichtleitelements (10) in dieses einzustrahlen,
wobei das Lichtleitelement (10) an seiner zur Lichtabstrahlung vorgesehenen Flachseite (12) Lichtauskoppelstrukturen (15) aufweist, welche durch eine erhabene, gitterartige Struktur gebildet sind, wobei Bereiche (17) der gitterartigen Struktur einen im Wesentlichen rechteckigen Querschnitt aufweisen und die senkrecht zur Flachseite (12) des Lichtleitelements (10) orientierte Seitenwände (18) der gitterartigen Struktur einen Lichtaustritt ermöglichen, und
wobei das Lichtleitelement (10) eine rechteckige, insbesondere eine quadratische Form aufweist, wobei an allen vier Umfangsflächen (11) des Lichtleitelements (10) jeweils unabhängig aktivierbare Leuchtmittel (22) oder Leuchtmittelgruppen (21) angeordnet sind, um eine Verteilung des von dem Lichtleitelement (10) abgegebenen Lichts einstellen zu können.

2. Leuchte nach Anspruch 1,
**dadurch gekennzeichnet,**
**dass** die Leuchtmittel (22) oder Leuchtmittelgruppen (21) in ihrer Helligkeit einstellbar sind.

3. Leuchte nach einem der vorherigen Ansprüche,
**dadurch gekennzeichnet,**
**dass** das Lichtleitelement (10) eine sich verändernde Dicke aufweist, insbesondere ausgehend von seinem Außenumfang eine sich in Richtung des Zentrums verjüngende Dicke.

4. Leuchte nach einem der vorherigen Ansprüche,
**dadurch gekennzeichnet,**
**dass** im Zentrum des Lichtleitelements (10) eine weitere Lichtquelle (50) angeordnet ist, deren Licht unabhängig von dem Lichtleitelement (10) abgegeben wird.

5. Leuchte nach Anspruch 4,
**dadurch gekennzeichnet,**
**dass** der Lichtquelle (50) ein von dem Lichtleitelement (10) getrenntes optisches Element (55) zugeordnet ist.

6. Leuchte nach Anspruch 5,
**dadurch gekennzeichnet,**
**dass** das optische Element (55) durch eine Linse gebildet ist.

## Claims

1. Lamp (100), in particular an emergency light, comprising:
• a plate-shaped light-conducting element (10), which is designed to radiate, via a flat side (12), light that is radiated into the light-conducting element (10) at circumferential surfaces (11) thereof,
• lighting means (20) arranged on the outer circumference of the light-conducting element (10) and designed to radiate light into the light-conducting element (10) via the circumferential surfaces (11) thereof,
wherein on its flat side (12) provided for light radiation, the light-conducting element (10) comprises light-decoupling structures (15), which are formed by a raised, grid-like structure, wherein regions (17) of the grid-like structure have a substantially rectangular cross-section and the side walls (18), oriented perpendicularly to the flat side (12) of the light-conducting element (10), of the grid-like structure allow light emission, and
wherein the light-conducting element (10) has a rectangular, in particular a square shape, wherein independently activatable lighting means (22) or groups of lighting means (21) are respectively arranged on all four circumferential surfaces (11) of the light-conducting element (10) in order to be able to adjust a distribution of the light emitted by the light-conducting element (10) .

2. Lamp according to claim 1,
**characterized in that**
the lighting means (22) or groups of lighting means (21) are adjustable in their brightness.

3. Lamp according to any one of the preceding claims, **characterized in that**
the light-conducting element (10) has a changing thickness, in particular a thickness tapering from its outer circumference toward the center.

4. Lamp according to any one of the preceding claims, **characterized in that**
a further light source (50) is arranged in the center of the light-conducting element (10), the light of said further light source being emitted independently of the light-conducting element (10).

5. Lamp according to Claim 4,
**characterized in that**
the light source (50) is assigned to an optical element (55) separate from the light-conducting element (10).

6. Lamp according to Claim 5,
**characterized in that**
the optical element (55) is formed by a lens.

## Revendications

1. Luminaire (100), en particulier luminaire de secours, présentant :
• un élément de guidage de lumière (10) en forme de plaque, conçu pour émettre de la lumière par un côté plat (12), laquelle lumière a été rayonnée dans ledit élément de guidage de lumière (10) au niveau de surfaces périphériques (11) de celui-ci,
• des moyens d'éclairage (20) agencés sur la périphérie extérieure de l'élément de guidage de lumière (10) et conçus pour rayonner de la lumière dans ledit élément de guidage de lumière (10) au travers desdites surfaces périphériques (11),
dans lequel l'élément de guidage de lumière (10) présente, sur son côté plat (12) prévu pour l'émission de lumière, des structures de sortie de lumière (15) formées par une structure en relief en forme de grille, des zones (17) de ladite structure en forme de grille présentant une section transversale sensiblement rectangulaire et les parois latérales (18) de la structure en forme de grille orientées perpendiculairement au côté plat (12) de l'élément de guidage de lumière (10) permettant une sortie de lumière, et dans lequel l'élément de guidage de lumière (10) présente une forme rectangulaire, plus particulièrement une forme carrée, des moyens d'éclairage (22) ou groupes de moyens d'éclairage (21) susceptibles d'être activés de manière respectivement indépendante étant agencés sur les quatre surfaces périphériques (11) de l'élément de guidage de lumière (10) pour pouvoir régler la distribution de la lumière émise par l'élément de guidage de lumière (10).

2. Luminaire selon la revendication 1,
**caractérisé en ce que**
les moyens d'éclairage (22) ou groupes de moyens d'éclairage (21) sont réglables en luminosité.

3. Luminaire selon l'une des revendications précédentes, **caractérisé en ce que**
l'élément de guidage de lumière (10) présente une épaisseur changeante, en particulier une épaisseur allant en diminuant, de sa périphérie extérieure vers le centre.

4. Luminaire selon l'une des revendications précédentes, **caractérisé en ce que**
une autre source de lumière (50), dont la lumière est émise indépendamment de l'élément de guidage de lumière (10), est agencée au centre de l'élément de guidage de lumière (10).

5. Luminaire selon la revendication 4,
**caractérisé en ce que**
un élément optique (55) séparé de l'élément de guidage de lumière (10) est associé à la source de lumière (50).

6. Luminaire selon la revendication 5,
**caractérisé en ce que**
l'élément optique (55) est formé par une lentille.
